# EUROPÄISCHE PATENTSCHRIFT

(11) **EP 4 179 250 B1**
(45) Veröffentlichungstag und Bekanntmachung des Hinweises auf die Patenterteilung: **22.05.2024**
(21) Anmeldenummer: 21742770.7
(22) Anmeldetag: 05.07.2021
(51) Int. Cl.: F17C 5/00, F17C 5/06

(54) **VERFAHREN ZUR VORBEREITUNG DER BETANKUNG EINES FAHRZEUGS**
METHOD FOR PREPARING TO REFUEL A VEHICLE
PROCÉDÉ DE PRÉPARATION AU RAVITAILLEMENT D'UN VÉHICULE

(30) Priorität: 13.07.2020 DE 102020004202
(43) Veröffentlichungstag der Anmeldung: 17.05.2023
(73) Patentinhaber: cellcentric GmbH & Co. KG, 73230 Kirchheim unter Teck (DE)
(72) Erfinder: GEHRING, Ottmar, 71106 Magstadt (DE); BALLARIN, Christian, 70180 Stuttgart (DE); MAUS, Steffen, 72766 Reutlingen (DE); FRANZEN, Jens, 70188 Stuttgart (DE)
(74) Vertreter: Platzöder, Michael Christian
(86) Internationale Anmeldenummer: PCT/EP2021/068468
(87) Internationale Veröffentlichungsnummer: WO 2022/012986

(56) Entgegenhaltungen:
- DE-A1- 10 241 688
- JP-A- 2002 373 230
- PEHR K ET AL: "Liquid hydrogen for motor vehicles - the world's first public LH"2 filling station", INTERNATIONAL JOURNAL OF HYDROGEN ENERGY, ELSEVIER SCIENCE PUBLISHERS B.V., BARKING, GB, Bd. 26, Nr. 7, 1. Juli 2001 (2001-07-01), Seiten 777-782, XP004250297, ISSN: 0360-3199, DOI: 10.1016/S0360-3199(00)00128-2

## Beschreibung

Die Erfindung betrifft ein Verfahren zur Vorbereitung der Betankung eines Tanks in einem Fahrzeug mit Wasserstoff, nach der im Oberbegriff von Anspruch 1 näher definierten Art.

Die Betankung mit Wasserstoff ist im Vergleich zu einer Betankung mit Benzin, Diesel oder dergleichen relativ aufwändig. Dies trifft insbesondere dann zu, wenn der Wasserstoff nicht in gasförmiger Phase als Druckwasserstoff bevorratet und/oder in dem Fahrzeug gespeichert wird, sondern wenn der Tank des Fahrzeugs ein sogenannter Kryotank ist, welcher den Wasserstoff in flüssiger Form bei entsprechend tiefer Temperatur speichert. Dabei dann ist es kritisch, wenn der Tankdruck über einen vorgegebenen Maximaldruck steigt, sei es im Betrieb oder insbesondere während der Betankung, da dann Wasserstoff abgeblasen werden muss, um den zulässigen Maximaldruck einzuhalten. Dieser sogenannte Boil-off ist ein gravierender Nachteil, den es zu vermeiden gilt.

Aus dem allgemeinen Stand der Technik ist es prinzipiell bekannt, geeignete Strategien bei der Betankung von Fahrzeugen mit Wasserstoff anzuwenden, um so beispielsweise möglichst viel Wasserstoff tanken zu können. Dafür kann in der Anfahrt auf eine Tankstelle bewusst und vermehrt Wasserstoff anstelle von anderen in dem Fahrzeug gegebenenfalls vorhandenen Energieträgern zur Bereitstellung von Energie, sei es Antriebsenergie oder Energie für die Klimatisierung oder dergleichen, genutzt werden. In diesem Zusammenhang kann auf die DE 10 2017 006 158 A1 der Anmelderin verwiesen werden. Dort sind entsprechende Strategien beschrieben, um eine vorgeplante Fahrtroute mit minimalen Tankzeiten möglichst effizient bewältigen zu können.

Die DE 10 2012 018 515 A1 offenbart die Betankung eines Brennstoffzellenfahrzeugs aus einer mobilen Tankeinrichtung, wozu eine entsprechende Kommunikation über einen möglichen Ort der Betankung zwischen dem Anbieter der mobilen Tankeinrichtung und dem Fahrzeug selbst stattfindet. Die Kommunikation zwischen einem zu betankenden Fahrzeug und einer Stationären Tankstelle ist dabei auch Gegenstand der JP 4153690 sowie, dort bezogen auf gasförmigen Wasserstoff, der JP 5839546. Auf Basis von vorgegebenen Daten des Fahrzeugs bzw. seines Tanks, welche an die Tankstelle übermittelt werden, lässt sich auch die Betankung dahingehend optimieren, dass eine möglichst genaue Temperatur am Ende des Betankungsvorgangs vorausberechnet wird, was in der JP 5740468 entsprechend beschrieben ist. Zum weiteren Stand der Technik kann außerdem auf die US 7 325 561 hingewiesen werden, welche ganz allgemein eine Optimierung der Betankung mit Wasserstoff beschreibt, bei welcher Wasserstoff in der Anfahrt auf die Tankstelle vermehrt konsumiert wird, wodurch sich typischerweise das Druckniveau des Tanks reduziert.

Ferner offenbart die DE 102 41 688 A1 eine Wasserstofftankstellen-Ladesteuereinheit, die in der Lage sein soll, durch ein Kommunikationsnetzwerk mit einer Mehrzahl von Wasserstofffahrzeugen zu kommunizieren, die mit Wasserstoff in fahrzeugeigenen Wasserstoffbehältern fahren, die an einer Wasserstofftankstelle beladen werden, mit einem Empfänger, der von jedem der Wasserstofffahrzeuge durch das Kommunikationsnetzwerk ein Wasserstoffvolumen jedes der Wasserstoffbehälter empfängt, und wobei darauf basierend für die Wasserstofftankstelle ein Wasserstoffladeplan für jedes der Wasserstofffahrzeuge erzeugt wird.

Die JP 2002 373230 A offenbart ein Verfahren und eine Vorrichtung zur Versorgung mit Wasserstoff unter Verwendung eines Computers, die es einem Fahrzeug (Wasserstoffauto), das während der Fahrt Wasserstoff verbraucht, ermöglichen sollen, sicher einen Nachschub von Wasserstoff zu erhalten. Weiterhin ist in dem Artikel aus dem International Journal of Hydrogen Energy, Elsevier Science Publishers B.V., Barking, GB, Bd. 26, Nr. 7, 1. Juli 2001, Seiten 777-782, XP004250297, ISSN: S0360-3199, DOI: 10.1016/S0360-3199 (00)00128-2 eine Betankung eines Kraftfahrzeugs an einer öffentlichen Tankstelle mit flüssigem Wasserstoff offenbart.

Die Aufgabe der hier vorliegenden Erfindung besteht nun darin, ein verbessertes Verfahren gemäß dem Oberbegriff des Anspruchs 1 anzugeben, welches eine Optimierung der Vorbereitung auf die Betankung ermöglicht.

Erfindungsgemäß wird diese Aufgabe durch ein Verfahren mit den Merkmalen im Anspruch 1, und hier insbesondere im kennzeichnenden Teil des Anspruchs 1, gelöst.

Vorteilhafte Ausgestaltungen und Weiterbildungen des Verfahrens ergeben sich aus den hiervon abhängigen Unteransprüchen.

Bei dem erfindungsgemäßen Verfahren zur Vorbereitung der Betankung eines Tanks in einem Fahrzeug mit Wasserstoff ist es vorgesehen, dass die Betankung mit flüssigem Wasserstoff erfolgt. Zur Vorbereitung auf die Betankung wird, so wie es im Stand der Technik ebenfalls bekannt ist, der Tankdruck abgesenkt, sodass bei der Betankung trotz der dabei unvermeidlichen Erwärmung des flüssigen Wasserstoffs, welcher in den Tank des Fahrzeugs strömt, eine möglichst hohe Menge an Wasserstoff getankt werden kann, bevor der Maximaldruck des Tanks erreicht ist und zum Abbruch des Betankungsvorgangs und/oder zum Abblasen von Wasserstoff, welcher in die gasförmige Phase gewechselt hat, führt.

Erfindungsgemäß ist es so, dass die Betankung mit flüssigem Wasserstoff erfolgt, wobei das maximale Druckniveau des Tanks, das beim Erreichen der Tankstelle erwartete Druckniveau des Tanks und die zu erwartende Betankungsmenge an die Tankstelle übermittelt wird. Damit lässt sich die Betankung einerseits fahrzeugseitig durch das Absenken des Drucks in dem Tank sinnvoll vorbereiten und andererseits liegen der Tankstelle die erwartenden Daten bezüglich der Betankung vor, sodass auch dort die Betankung bereits vorbereitet werden kann, sodass diese möglichst schnell und effizient durchgeführt werden kann.

Gemäß einer sehr vorteilhaften Weiterbildung des erfindungsgemäßen Verfahrens kann es dabei vorgesehen sein, dass Vorgaben der Tankstelle an das Tanksystem des Fahrzeugs von der Tankstelle zu dem Fahrzeug übermittelt werden. Ein solcher Abgleich zwischen dem Fahrzeug und der Tankstelle ist ideal geeignet, um die Druckniveaus und die Mengen auszutauschen. Damit kann der Betankungsvorgang im Allgemeinen noch weiter optimiert werden, sodass die Betankungszeit verkürzt und/oder die betankte Menge an Wasserstoff erhöht werden kann.

Dabei ist es insbesondere vorgesehen, dass die Auswahl der Tankstelle auf Basis einer auf einem fahrzeugexternen Server, beispielsweise einem Logistikmanagementsystem, vorgeplanten Fahrtroute basiert, selbst jedoch in einem Fahr- und Tankstrategiemodul erfolgt und der Tankstelle und dem fahrzeugexternen Server übermittelt wird. Damit wissen alle im System Beteiligten über die festgelegte Tankstrategie und die zu erwartende Anfahrt an die Tankstelle sowie den Zeitpunkt, die benötigte Wasserstoffmenge und das maximale Druckniveau des Tanks Bescheid.

Gemäß einer vorteilhaften Weiterbildung dieser Idee kann die Auswahl dabei über das Fahr- und Tankstrategiemodul in einer Cloud erfolgen, welches vorzugsweise auf der Basis einer modellgestützten Prädiktion des Tankzustandes, bestehend aus Druck, Temperatur und Füllmenge, verschiedene Varianten zur Betankung berechnet und eine optimierte Strategie bezüglich der Druckabsenkung in dem Tank und der Tankstellenauswahl erstellt. Damit kann über ein solches Fahr- und Tankstrategiemodul eine optimierte Strategie für die Betankung ermittelt werden. Mit Hilfe mehrerer Berechnungen können dazu verschiedene Varianten von Strategien erstellt und überprüft werden. Dabei kann zum Beispiel durch Iteration oder andere Optimierungsverfahren oder Heuristiken eine Optimierung erfolgen. Diese Optimierung umfasst dann einerseits die Auswahl der Tankstelle, und damit letztlich die Entfernung und die Streckenführung zu eben dieser und andererseits eine Strategie, um auf dieser Strecke sowie gegebenenfalls auf der Strecke befindlichen Zwischenhalten das Niveau des Drucks im Tank in möglichst geeigneter und effizienter Art abzusenken.

Dabei lässt sich die Druckabsenkung nicht nur durch einen Verbrauch von Wasserstoff für die Antriebsenergie erreichen, sondern auch, indem Wasserstoff genutzt wird, um beispielsweise eine Traktionsbatterie nachzuladen, eine Klimatisierung der Fahrerkabine und/oder eine Kühlung von Ladegut primär über Energie, welche von einer Brennstoffzelle aus dem Wasserstoff gewonnen wird, zu realisieren. Darüber hinaus ist es denkbar eine Bereitstellung von Druckluft oder ähnliches vorzunehmen. Im Stillstand des Fahrzeugs kann ebenfalls, beispielsweise zur Kühlung von Ladung, elektrische Energie aus dem Wasserstoff erzeugt werden, welcher zu Absenkung des Drucks aufgebraucht werden muss. Diese elektrische Energie kann dann auch über ein Ladekabel in ein stationäres Energieversorgungsnetz eingespeist und durch den Netzbetreiber vergütet werden. Bei regenerativ erzeugtem Wasserstoff wäre der so erzeugte Strom als regenerativ zu bewerten und würde dementsprechend eine höhere Vergütung durch den Betreiber des Energieversorgungsnetzes erzielen.

Das Fahr- und Tankstrategiemodul kann dabei nicht nur den Weg und die Besonderheiten auf der Fahrtstrecke bis zur Tankstelle berücksichtigen, sondern kann gemäß einer sehr vorteilhaften Weiterbildung der Idee auch die zukünftige Verwendung des Fahrzeugs auf der vorgeplanten Fahrtstrecke nach dem Betankungsvorgang berücksichtigen. Erfolgt dort beispielsweise die Fahrt über ein starkes Gefälle, dann könnte, sofern andere Möglichkeiten bestehen den Wasserstoff zur Druckabsenkung zu verbrauchen, die Traktionsbatterie eher nicht nachgeladen werden, da diese sich durch die Rekuperation auf einer solchen Strecke ohnehin sehr effizient und ohne externen Energiebedarf aufladen ließe.

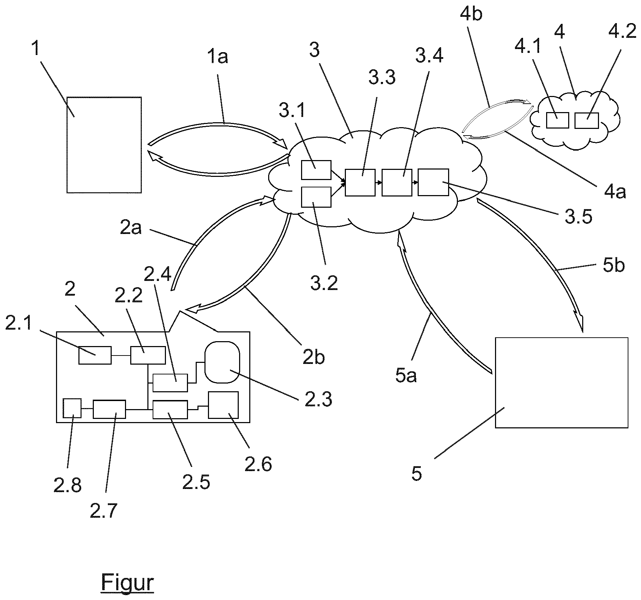

Weitere vorteilhafte Ausgestaltungen des erfindungsgemäßen Verfahrens ergeben sich auch aus dem Ausführungsbeispiel, welches unter Bezugnahme auf die Figur näher beschrieben ist.

Die einzige beigefügte Figur zeigt dabei ein Blockschaltbild eines dem Verfahren zugrunde liegenden Systems.

Ein möglicher detaillierter Ablauf des erfindungsgemäßen Verfahrens, ohne das Verfahren darauf einzuschränken, wird nun nachfolgend anhand dieses Blockschaltbildes entsprechend beschrieben. Ein erster Schritt ist dabei eine Logistikplanung in der hier mit 1 bezeichneten Box, die bei einem Flottenbetreiber einer Flotte von Fahrzeugen, insbesondere Nutzfahrzeugen, erfolgt. Im Allgemeinen wird diese Logistikplanung 1 in einem sogenannten Transportmanagementsystem durchgeführt. Dabei werden Transportaufträge mit einzelnen Fahrzeugen 2 und ihren Fahrern verknüpft. Ferner wird eine Zeit- und Streckenplanung für das jeweilige Fahrzeug 2 durchgeführt. Das so in der Logistikplanung 1 entstandene Datenpaket enthält typischerweise die Streckendaten, also die Koordinaten der einzelnen Abschnitte, eine Zeitplanung mit Abfahrtszeiten, Be- und Entladezeiten, Pausenzeiten und dergleichen. Außerdem sind in dem Datenpaket Angaben zum Fahrzeug 2, beispielsweise verschiedene Fahrzeugparameter, seine Ausstattung, seine Fahrzeugidentifikationsnummer und dergleichen, hinterlegt. Außerdem enthält das Datenpaket Daten zum Fahrer sowie zur Ladung des Fahrzeugs, und hier insbesondere zu deren Gewicht.

Dieses Datenpaket wird über die mit 1a bezeichnete Kommunikation zu einem Fahr- und Tankstrategiemodul 3 übertragen und dort über eine Datenschnittstelle 3.1 empfangen. Sie wird dann in einem Fahrprädiktionsmodul 3.3 weiterverarbeitet. Passend zu den Angaben über das Fahrzeug 2 aus dem über die Kommunikation1a übertragenen Datenpaket werden über ein weiteres Schnittstellenmodul 3.2 Daten über das Fahrzeug 2 über die Kommunikation 2a/ 2b angefordert bzw. mit Hilfe eines Kommunikationsmoduls 2.1 des Fahrzeugs 2 ausgelesen. Dazu gehören beispielsweise physikalische Messwerte des Flüssiggastanks 2.3, beispielsweise Druck, Temperatur und Füllmenge, die von einem Tanksteuermodul 2.4 erfasst werden, sowie der Ladezustand eventuell vorhandener Traktionsbatterien 2.8 bzw. anderer Energiespeicher. Mit Hilfe der Logistikplanungsdaten 1a und der Fahrzeugdaten 2a berechnet dann das Fahrprädiktionsmodul 3.3 des Fahr- und Tankstrategiemoduls 3 den Energiebedarf sowie weitere Fahrzeugzustände auf der geplanten Fahrstrecke mit dem geplanten Fahrzeug, seiner Ladung, den Messwerten seines Flüssiggastanks 2.3 und dergleichen. Dabei werden auch Einflüsse des Verkehrs, gegebenenfalls des Fahrers, der Topografie, des Wetters und der Verkehrsinfrastruktur entsprechend berücksichtigt. Diese Informationen können über zusätzliche Module 4 beispielsweise in Form von Wetterinformationen 4.1 und/oder Verkehrsinformationen 4.2 als Datenpakete über den Weg 4b angefordert und/oder über den Weg 4a abgerufen werden.

Mit den berechneten Ergebnissen des Fahrprädiktionsmoduls 3.3 kann ein Tankzustandsvorhersagemodul 3.4 die Verbräuche des flüssigen Wasserstoffs in dem Flüssiggastank 2.3 berechnen und des Weiteren auch den zukünftigen Zustand des Flüssiggastanks 2.3 bezüglich Druck, Temperatur und Füllstand abschätzend vorausberechnen.

Diese Ergebnisse des Tankzustandsvorhersagemoduls 3.4 werden nun einem Tankstrategiemodul 3.5 zugeführt, welches sie verwendet, um eine optimale Tankstrategie zu ermitteln. Die Tankstrategie umfasst dabei die Festlegung der Zeitpunkte bzw. der passenden Tankstellen 5 basierend auf der geplanten Fahrstrecke, der Fahrzeug- und Zeitplanung sowie der vorausberechneten Energieverbräuche bzw. der sich daraus ergebenden Reichweite des in dem Flüssiggastank 2.3 sowie gegebenenfalls weiteren Energiespeichern 2.8 verfügbaren Restenergie. Darüber hinaus kann eine Verfügbarkeit bzw. Reservierung eines Zeitfensters an einer Tankstelle 5 durch eine Anfrage beim Tankstellenbetreiber gemäß der Kommunikation 5a/ 5b durchgeführt werden.

Wurde nun eine optimale Tankstrategie ermittelt, gegebenenfalls indem mehrere Strategien durchgerechnet und entsprechend bewertet worden sind, dann wird diese dem Flottenbetreiber bzw. Disponenten in der Logistikplanung 1, dem Fahrzeug 2 bzw. dessen Fahrer und dem Betreiber der ausgewählten Tankstelle 5 entsprechend übermittelt. Neben einer Anzeige der ermittelten Tankstrategie beispielsweise in dem Fahrzeug 2 zur Unterrichtung des Fahrers, insbesondere über ein Navigationsgerät und ein zugehöriges Display, erfolgt eine Weiterleitung der Tankstrategie, also der Zeitpunkt und die Streckeninfo, im Vorfeld der geplanten Betankung über die Schnittstelle 2.1 zu einem zentralen Antriebssteuergerät 2.2 des Fahrzeugs. Dieses gibt eine Betriebsstrategie für das Fahrzeug 2 vor. Die Betriebsstrategie kann nun in Kenntnis des Zeitpunkts, an welchem die Tankstelle 5 zur Betankung erreicht wird, und dem berechneten Leistungsbedarf auf der bekannten Fahrstrecke dorthin den Verbrauch des flüssigen Wasserstoffs im Vorfeld der geplanten Betankung so steigern, dass der Druck in dem Tank 2.3 bis zum Erreichen der Tankstelle 5 soweit als möglich absinkt. Dies kann beispielsweise durch eine rechtzeitige Erhöhung des Treibstoffverbrauchs durch eine Brennstoffzelle 2.6 in dem Fahrzeug 2 erfolgen, wobei unter Berücksichtigung des Ladezustands einer elektrischen Batterie 2.8 der erwartende Nebenverbraucher bzw. ihrer Energiebedarfe und des Energiebedarfs durch die Fahrt selbst erfolgen kann. Die Boxen 2.5 und 2.7 zeigen dabei die der Brennstoffzelle 2.6 bzw. der Batterie 2.8 zugeordneten Steuergeräte.

Darüber hinaus ist es so, dass eine Druckabsenkung in dem Tank 2.3 auch über andere Verbraucher und insbesondere auch bei abgestelltem Fahrzeug erfolgen kann bzw. durch den Fahrer des Fahrzeugs 2 eingeleitet werden kann. Entweder kann das Fahrzeug direkt oder über eine Fernbedienung, eine App oder auch mittelbar über die Logistikplanung 1 beeinflusst werden. Wasserstoff lässt sich dann beispielsweise verbrauchen, um die Batterie 2.8 auch während des Stillstands zu laden, um eine Vorkonditionierung der Kabinentemperatur des Fahrzeugs 2 vorzunehmen, die Batterie 2.8 zu kühlen oder auch bei einem Kühlaufbau die Ladung zu kühlen. Auch weitere Nebenverbraucher wie beispielsweise Luftkompressoren können angesteuert werden, um Drucklufttanks zu füllen und dadurch Energie zu verbrauchen und den Druck im Tank 2.3 abzusenken. Diese Aspekte können selbstverständlich auch während der Fahrt des Fahrzeugs 2 umgesetzt werden.

Eine weitere Alternative ist es, und dies ist nur im Stillstand des Fahrzeugs 2 möglich, dieses über einen entsprechenden Ladestecker mit einer Ladestation zu verbinden, welche ihrerseits mit einem Stromnetz verbunden ist. Diese Ladestation, welche eine Rückführung von Ladung von dem Fahrzeug 2 bzw. seiner Brennstoffzelle 2.6 und/oder Batterie 2.8 in das Stromnetz ermöglicht, kann dann genutzt werden, um Elektrizität aus Wasserstoff mit der Brennstoffzelle 2.6 zu erzeugen und in das stationäre Stromnetz einzuspeisen. Auch hierdurch lässt sich der Druck im Tank 2.3 beispielsweise unmittelbar vor einer bei der Weiterfahrt angefahrenen Tankstelle 5 absenken, um so den Tankvorgang zu optimieren. Die eingespeiste Elektrizität lässt sich dabei entsprechend vergüten. Ist das getankte Gas regenerativ erzeugt worden, so kann diese Elektrizität auch als regenerativ erzeugter "grüner" Strom klassifiziert, eingespeist und entsprechend abgerechnet werden.

Zur Ermittlung der eigentlichen Tankstrategie in dem Tankstrategiemodul 3.5 sind nun verschiedene Optimierungsverfahren denkbar, da verschiedene Optionen mit verschieden weit entfernten Tankstellen den bis dahin zu erwartenden Verbräuchen und Zuständen entsprechend des Tankzustandsvorhersagemoduls 3.4 und/oder des Fahrprädiktionsmoduls 3.3 genutzt werden können. Das Ziel der Optimierung muss es sein, eine möglichst effiziente Strategie mit möglichst geringen Energie- und Zeitverlusten sowie den optimalen Kosten zu ermöglichen. Daher können gegebenenfalls auch Preise für den Treibstoff mit in die Strategie einbezogen werden, welche zuvor beispielsweise beim Tankstellenbetreiber und/oder von der Logistikplanung 1 abgerufen worden sind. Im oben beschriebenen Falle der Einspeisung von elektrischer Energie in ein Netz kann auch die Höhe einer erzielbaren Einspeisevergütung in diese Strategie mit einfließen.

Wie bereits erwähnt wird die als optimal festgestellte Tankstrategie dann an die Beteiligten, also den Disponenten in der Logistikplanung 1, das Fahrzeug 2 bzw. den Fahrer und den ausgewählten Tankstellenbetreiber, entsprechend übermittelt. Die Übermittlung kann dabei direkt oder mittelbar erfolgen, beispielsweise indem das Fahrzeug selbst nur mit der Logistikplanung 1 bzw. dem Modul 3 kommuniziert und alle anderen Schritte von dort eingeleitet werden.

Die Daten, welche dann von dem Fahrzeug 2 zu der Tankstelle 5 des ausgewählten Tankstellenbetreibers übermittelt werden, enthalten dabei das machbare Druckniveau des Tanks 3.2, also der bei der Betankung mögliche Maximaldruck, und die zu erwartende Tankmenge, welche über die Kommunikation zwischen dem Modul 3 und dem Fahrzeug 2 sowie der Weitergabe der Daten an die Tankstelle 5 übertragen werden, sodass der Tankvorgang in der Tankstelle 5 bereits vorbereitet werden kann. Daneben ist auch eine Übertragung in umgekehrter Richtung denkbar, um beispielsweise Vorgaben der Tankstelle 5 an das Fahrzeug 2 zu übertragen, was ebenfalls zur Optimierung der Betankung beiträgt.

## Patentansprüche

1. Verfahren zur Vorbereitung der Betankung eines Tanks (2.3) in einem Fahrzeug (2) mit Wasserstoff, wobei die Betankung mit flüssigem Wasserstoff erfolgt, wobei eine Tankstelle (5) über die bevorstehende Betankung informiert wird,
**dadurch gekennzeichnet, dass**
in der Vorbereitung auf eine Anfahrt zu der Tankstelle (5) der Tankdruck abgesenkt wird, wobei das maximal erreichbare Druckniveau des Tanks (2.3) während der Betankung, das beim Erreichen der Tankstelle (5) erwartete Druckniveau des Tanks (2.3) und die zu erwartende Betankungsmenge an die Tankstelle (5) übermittelt wird.

2. Verfahren nach Anspruch 1,
**dadurch gekennzeichnet, dass**
Vorgaben der Tankstelle (5) an das Tanksystem des Fahrzeugs (2) von der Tankstelle (5) zu dem Fahrzeug (2) übermittelt werden.

3. Verfahren nach Anspruch 1 oder 2,
**dadurch gekennzeichnet, dass**
die Auswahl der Tankstelle (5) auf Basis einer auf einem fahrzeugexternen Server (1) vorgeplanten Fahrstrecke in einem Fahr- und Tankstrategiemodul (3) erfolgt und der Tankstelle (5) und dem fahrzeugexternen Server (1) übermittelt wird.

4. Verfahren nach Anspruch 3,
**dadurch gekennzeichnet, dass**
das Fahr- und Tankstrategiemodul (3) durch eine Cloud gebildet ist.

5. Verfahren nach Anspruch 3 oder 4,
**dadurch gekennzeichnet, dass**
das Fahr- und Tankstrategiemodul (3) auf der Basis einer modellgestützten Prädiktion des Tankzustandes, bestehend aus Druck, Temperatur und Füllmenge, verschiedene Varianten zur Betankung berechnet und eine optimierte Strategie bezüglich des Drucks in dem Tank (2.3) und der Auswahl der Tankstelle (5) erstellt.

6. Verfahren nach Anspruch 5,
**dadurch gekennzeichnet, dass**
bei der optimierten Strategie auch eine zukünftige Verwendung des Fahrzeugs (2) auf der vorgeplanten Fahrstrecke nach der Betankung berücksichtigt wird.

7. Verfahren nach Anspruch 5 oder 6,
**dadurch gekennzeichnet, dass**
in die optimale Strategie weitere externe Daten über Zustände der Fahrstrecke von wenigstens einem zusätzlichen externen Modul (4) berücksichtigt werden.

8. Verfahren nach Anspruch 5, 6 oder 7,
**dadurch gekennzeichnet, dass**
die optimierte Strategie an das Fahrzeug (2), den fahrzeugexternen Server (1) und die Tankstelle (5) übertragen wird.

9. Verfahren nach einem der Ansprüche 1 bis 8,
**dadurch gekennzeichnet, dass**
die Druckabsenkung durch einen Verbrauch von Wasserstoff erfolgt, wozu Antriebsenergie primär aus dem Wasserstoff bereitgestellt wird und/oder eine Traktionsbatterie (2.8) nachgeladen wird und/oder Nebenverbraucher des Fahrzeugs (2) betrieben werden.

10. Verfahren nach einem der Ansprüche 1 bis 9;
**dadurch gekennzeichnet, dass**
die Druckabsenkung im Stillstand des Fahrzeugs (2) zumindest teilweise durch die Erzeugung und Netzeinspeisung von elektrischer Energie erfolgt.

## Claims

1. A method for preparing to refuel a tank (2.3) in a vehicle (2) with hydrogen, wherein the refueling takes place with liquid hydrogen, wherein a filling station (5) is informed about the pending refueling,
**characterized in that**
in preparation for driving to the filling station (5) the tank pressure is lowered, wherein the maximum achievable pressure level of the tank (2.3) during refueling, the expected pressure level of the tank (2.3) when the filling station (5) is reached, and the expected refueling quantity are transmitted to the filling station (5).

2. The method according to claim 1,
**characterized in that**
specifications of the filling station (5) are transmitted to the tank system of the vehicle (2) from the filling station (5) to the vehicle (2).

3. The method according to claim 1 or 2,
**characterized in that**
the selection of the filling station (5) takes place on the basis of a route pre-planned on a vehicle-external server (1) in a driving and refueling strategy module (3) and is transmitted to the filling station (5) and the vehicle-external server (1).

4. The method according to claim 3,
**characterized in that**
the driving and refueling strategy module (3) is formed by a cloud.

5. The method according to claim 3 or 4,
**characterized in that**
the driving and refueling strategy module (3) calculates different variants for refueling on the basis of a model-supported prediction of the tank state, which consists of pressure, temperature, and refueling quantity, and creates an optimized strategy with regard to the pressure in the tank (2.3) and the selection of filling station (5).

6. The method according to claim 5,
**characterized in that**,
in the case of the optimized strategy, future use of the vehicle (2) on the pre-planned route after refueling is also taken into account.

7. The method according to claim 5 or 6,
**characterized in that**
further external data on states of the route from at least one additional external module (4) is taken into account in the optimal strategy.

8. The method according to claim 5, 6, or 7,
**characterized in that**
the optimized strategy is transmitted to the vehicle (2), the vehicle-external server (1), and the filling station (5).

9. The method according to any one of claims 1 to 8,
**characterized in that**
the pressure reduction takes place by consumption of hydrogen, for which purpose drive energy is made available primarily from the hydrogen and/or a traction battery (2.8) is recharged and/or secondary consumers of the vehicle (2) are operated.

10. The method according to any one of claims 1 to 9,
**characterized in that**
the pressure reduction is carried out at least partially by the generation and grid feed-in of electrical energy when the vehicle (2) is at a standstill.

## Revendications

1. Procédé de préparation du ravitaillement d'un réservoir (2.3) dans un véhicule (2) en hydrogène, dans lequel le ravitaillement est effectué avec de l'hydrogène liquide, dans lequel un poste d'approvisionnement (5) est informé du ravitaillement imminent,
**caractérisé en ce que**
lors de la préparation d'un trajet vers un poste d'approvisionnement (5), la pression du réservoir est abaissée, dans lequel le niveau de pression maximal pouvant être atteint du réservoir (2.3) au cours du ravitaillement, le niveau de pression du réservoir (2.3) attendu à l'arrivée au poste d'approvisionnement (5) et la quantité de ravitaillement à attendre sont transmis au poste d'approvisionnement (5).

2. Procédé selon la revendication 1,
**caractérisé en ce que**
des spécifications du poste d'approvisionnement (5) imposées au système de réservoir du véhicule (2) sont transmises par le poste d'approvisionnement (5) au véhicule (2).

3. Procédé selon la revendication 1 ou 2,
**caractérisé en ce que**
le choix du poste d'approvisionnement (5) est effectué sur la base d'un itinéraire planifié au préalable sur un serveur externe au véhicule (1) dans un module de stratégie de déplacement et d'approvisionnement (3) et est transmis au poste d'approvisionnement (5) et au serveur externe au véhicule (1).

4. Procédé selon la revendication 3,
**caractérisé en ce que**
le module de stratégie de déplacement et d'approvisionnement (3) est formé par un nuage.

5. Procédé selon la revendication 3 ou 4,
**caractérisé en ce que**
le module de stratégie de déplacement et d'approvisionnement (3) calcule, sur la base d'une prédiction assistée par un modèle de l'état du réservoir, constitué de la pression, de la température et de la quantité de remplissage, différentes variantes pour le ravitaillement et crée une stratégie optimisée en ce qui concerne la pression dans le réservoir (2.3) et le choix du poste d'approvisionnement (5).

6. Procédé selon la revendication 5,
**caractérisé en ce que**
une utilisation future du véhicule (2) sur l'itinéraire planifié au préalable après le ravitaillement est prise en compte également dans la stratégie optimisée.

7. Procédé selon la revendication 5 ou 6,
**caractérisé en ce que**
d'autres données externes concernant des états de l'itinéraire sont prises en compte par au moins un module externe supplémentaire (4) dans la stratégie optimale.

8. Procédé selon la revendication 5, 6 ou 7,
**caractérisé en ce que**
la stratégie optimale est transmise au véhicule (2), au serveur externe au véhicule (1) et au poste d'approvisionnement (5).

9. Procédé selon l'une quelconque des revendications 1 à 8, **caractérisé en ce que**
la baisse de pression est effectuée par une consommation d'hydrogène, de l'énergie d'entraînement issue en premier lieu de l'hydrogène étant fournie à cet effet et/ou une batterie de traction (2.8) étant chargée ultérieurement et/ou des consommateurs secondaires du véhicule (2) fonctionnant.

10. Procédé selon l'une quelconque des revendications 1 à 9,
**caractérisé en ce que**
la baisse de pression est effectuée à l'arrêt du véhicule (2) au moins en partie par la génération et l'injection d'énergie électrique dans le réseau.
